# EUROPÄISCHE PATENTSCHRIFT

(11) **EP 1 744 128 B1**
(45) Veröffentlichungstag und Bekanntmachung des Hinweises auf die Patenterteilung: **08.02.2012**
(21) Anmeldenummer: 06014317.9
(22) Anmeldetag: 11.07.2006
(51) Int. Cl.: G01D 5/347, G01D 5/249, B62D 15/02

(54) **Verfahren zum Bestimmen der absoluten Winkelstellung des Lenkrades eines Kraftfahrzeugs**
Method for determining the absolute angular position of the steering wheel of a motor vehicle
Procédé destiné à la détermination de la position angulaire absolue du volant d'un véhicule automobile

(30) Priorität: 14.07.2005 DE 102005032870
(43) Veröffentlichungstag der Anmeldung: 17.01.2007
(73) Patentinhaber: Leopold Kostal GmbH & Co. KG, 58507 Lüdenscheid (DE)
(72) Erfinder: Köster, Michael, 44265 Dortmund (DE)

(56) Entgegenhaltungen:
- WO-A-99/00645
- DE-A1- 3 424 806
- DE-A1- 19 758 104
- DE-C1- 19 500 817

## Beschreibung

Die Erfindung betrifft ein Verfahren zur Absolutbestimmung eines Drehwinkels, insbesondere der Winkelstellung des Lenkrades eines Kraftfahrzeugs mittels einer eine Lichtquelle und ein eine Vielzahl von optoelektronischen Wandlerelementen aufweisendes Sensorarray umfassenden Sende-Empfangseinheit sowie einem gegenüber dieser drehbar angeordneten, eine eindeutige, einspurige Codierung der Winkelwerte aufweisenden Codeträger, wobei ein zusammenhängendes Segment der Codierung auf das Sensorarray abgebildet wird, und das Ausgangssignal des Sensorarrays zur Ermittlung eines dem aktuellen Winkelwert entsprechenden Codeworts ausgewertet wird.

Die auch als Lenkwinkel bezeichnete absolute Winkelstellung des Lenkrades wird bei Kraftfahrzeugen benötigt, um mit diesem Wert etwa ein Fahrdynamikregelsystem beaufschlagen zu können. Ein solches Fahrdynamikregelsystem erhält neben dem genannten Lenkwinkelwert weitere Messdaten, etwa die Raddrehzahl oder die Drehung des Kraftfahrzeugs um seine Hochachse. Benötigt werden zum einen der absolute Lenkwinkeleinschlag und zum anderen die Lenkgeschwindigkeit, damit diese Werte zusammen mit den anderen erfassten Daten durch das Fahrdynamikregelsystem ausgewertet und zum Steuern von Aktoren, beispielsweise der Bremsen und/oder des Motormanagements umgesetzt werden können.

Aus der DE 40 22 837 A1 ist ein zur Durchführung eines solchen Verfahrens geeigneter optoelektronischer Lenkwinkelsensor bekannt. Der in diesem Dokument beschriebene Lenkwinkelsensor umfasst eine elektronische Steuereinheit sowie eine Sensoreinheit, bestehend aus zwei parallel und mit Abstand zueinander angeordneten Elementen - einer Lichtquelle und einem Zeilensensor - sowie einer zwischen der Lichtquelle und dem Zeilensensor angeordneten Codescheibe, die drehfest mit der Lenkspindel verbunden ist. Als Zeilensensor dient eine CCD-Sensorzeile. Als Codierung ist bei dieser Codescheibe eine sich über 360° erstreckende, als Lichtschlitz ausgebildete archimedische Spirale vorgesehen. Über die Belichtung entsprechender Wandlerelemente des Zeilensensors bei einem bestimmten Lenkeinschlag kann Aufschluss über die tatsächliche Lenkwinkelstellung gewonnen werden. Die als Codierung eingesetzte archimedische Spirale ist kontinuierlich verlaufend ausgebildet, so dass diese als analoge Codierung angesprochen werden kann. Mit der gleichen Anordnung lässt sich aber auch ebenso gut eine digitale Codierung auf der Codescheibe auslesen.

Aus der DE 197 58 104 A1 ist ein Verfahren zur Absolutbestimmung eines Drehwinkels gemäß dem Oberbegriff des Patentanspruchs 1 bekannt. Bei diesem vorbekannten Verfahren wird das Ausgangssignal des Sensorarrays durch die Auswertung scharfer, allgemein auch als Flanken bezeichneter Signaländerungen in einen Kontrastunterschied umgewandelt. Die Kontrastunterschiede werden mittels eines Mikrocontrollers dekodiert, indem sie mit einem die Winkelinformation darstellenden Schwarz-Weiß-Muster verglichen werden.

Dieses vorbekannte Verfahren vermag zwar grundsätzlich die Aufgabe zu lösen, den gesuchten Winkelwert zu ermitteln, es reagiert jedoch sehr empfindlich auf jede Art von Signalstörungen. So können zum Beispiel Verschmutzungen des optischen Systems zusätzliche Schattenwürfe hervorrufen, welche sich ebenfalls als Flanken in dem elektrischen Ausgangssignal äußern und damit zusätzliche, nicht der Codierung entsprechende Kontrastunterschiede bewirken. Insbesondere beim Einsatz im Automobil treten auch elektromagnetische Störungen auf, die zusätzliche Flanken in dem Ausgangssignal des Sensorarrays hervorrufen. Da das Auswerteverfahren aber gerade auf der Erkennung und Auswertung solcher Flanken bzw. der aus diesen abgeleiteten Kontrastunterschiede basiert, führen solche Störimpulse zu entsprechenden Fehlmessungen. Derartige Fehlmessungen können zwar mittels entsprechend ausgestalteter Abläufe zur Plausibilitätsüberprüfung der aus ihnen resultierenden Messergebnisse erkannt werden, eine Korrektur dieser Messergebnisse ist jedoch nicht möglich.

Ausgehend von diesem diskutierten Stand der Technik liegt der Erfindung daher die Aufgabe zugrunde, ein Verfahren der eingangs genannten Art dergestalt weiterzubilden, dass eine deutlich erhöhte Unempfindlichkeit gegen Fremdeinflüsse insbesondere durch Verschmutzungen oder elektromagnetische Störimpulse erreicht wird.

Diese Aufgabe wird erfindungsgemäß dadurch gelöst, dass das Ausgangssignal des Sensorarrays zur Rekonstruktion des abgebildeten Segments der Codespur in einem ersten Korrelationsfilter einer Faltungsoperation mit einem Referenz-Signal unterworfen wird, das ermittelte abgebildete Segment der Codespur in ein dasselbe repräsentierendes Bitmuster umgesetzt wird, das Bitmuster in einem zweiten Korrelationsfilter einer Faltungsoperation mit einem die gesamte Winkelinformation der Codespur darstellenden Referenz-Bitmuster unterworfen wird, und dass als aktuelles Codewort die Position der besten Übereinstimmung des Bitmusters mit dem Referenz-Bitmuster ermittelt wird.

Vorteilhafterweise stellt das Referenz-Signal einen kurzen Abschnitt aus einem idealisierten Codesignal dar.

Besonders sicher wird die Auswertung dadurch, dass in dem ersten Korrelationsfilter aus dem Ausgangssignal des Sensorarrays und dem Referenz-Signal eine erste Korrelationsfunktion gebildet wird, deren Extremwerte die Lage der Hell-Dunkel-Übergänge des Codesignals wiedergeben. Diese Extremwerte der Korrelationsfunktion werden dann in einem ersten Entscheidungsfilter mit festgelegten Korrelationsschwellwerten verglichen, und nur beim Über- bzw. Unterschreiten des entsprechenden Korrelationsschwellwerts wird das Vorliegen eines Hell-Dunkel-Übergangs des Codesignals festgestellt.

Besonders bevorzugt wird als Ergebnis der Faltungsoperation des Bitmusters mit dem Referenz-Bitmuster eine zweite Korrelationsfunktion gebildet, deren absolutes Maximum die Position der besten Übereinstimmung des Bitmusters mit dem Referenz-Bitmuster angibt.

Eine weitere Verbesserung der Sicherheit wird dadurch erreicht, dass das absolute Maximum der zweiten Korrelationsfunktion in einem zweiten Entscheidungsfilter mit einem festgelegten Korrelationsschwellwert verglichen wird, und nur beim Überschreiten des Korrelationsschwellwerts durch den Maximalwert der Korrelationsfunktion der Winkelwert als gültig markiert wird.

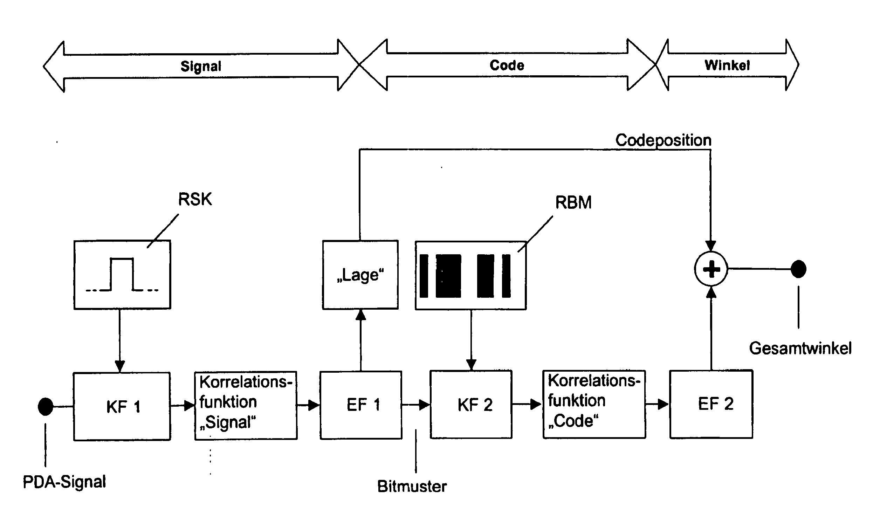

Weitere Vorteile und Ausgestaltungen der Erfindung sind Bestandteil weiterer Unteransprüche sowie der nachfolgenden Beschreibung eines Ausführungsbeispiels unter Bezugnahme auf die beigefügte einzige Figur, die ein Blockdiagramm des Verfahrensablaufs zeigt.

Bei dem vorliegenden Ausführungsbeispiel wird von einer Winkelsensor-Anordnung ausgegangen, bei der ein Codeträger, der eine eine digitale Codierung der Winkelwerte darstellende Codespur aufweist, gegenüber einer optoelektronischen Sende-Empfangseinheit drehbar gelagert ist. Die Codespur stellt dabei eine eindeutige Codierung der Winkelwerte von 0° bis 360° dar, und der Empfänger der Sende-Empfangseinheit wird durch einen aus einer Vielzahl von Photodioden gebildeten Zeilensensor, ein sogenanntes Photodiodenarray (PDA) gebildet. In dem vorliegenden Beispiel wird ein PDA verwendet, das 128 einzelne, auch als Pixel bezeichnete Photodioden aufweist. Dieses PDA wird durch den ihm zugeordneten Lichtsender, etwa eine Leuchtdiode (LED) durch den die Codierung enthaltenden Codeträger hindurch belichtet. Die Codierung ist dabei z.B. durch eine Abfolge lichtdurchlässiger Durchbrechungen in dem aus einem undurchsichtigen Material bestehenden Codeträger realisiert. Im Falle einer radialen Durchleuchtung dieser Codierung ist diese als umlaufende Spur auf einer Zylindermantelfläche eines entsprechenden Codeträgers realisiert, bei einer axialen Durchleuchtung als eine kreisringförmige Spur mit konstantem mittlerem Radius auf einer Codescheibe.

Durch die Durchleuchtung dieser Codierung wird auf dem PDA eine die entsprechende Winkelposition repräsentierende Lichtverteilung abgebildet. Je nach der gewünschten Auflösung der Winkelcodierung sowie den sonstigen geometrischen Verhältnissen ergibt sich eine kleinste Strukturbreite der Abbildung der Codierung auf das PDA. Damit soll hier der kürzeste Abstand zwischen zwei Hell-Dunkel-Übergängen der Lichtverteilung auf dem PDA bezeichnet sein, der in dem betrachteten Ausführungsbeispiel einem Winkelabstand von einem Grad auf dem Codeträger bzw. einer Länge von etwa 10 Pixeln auf dem PDA entspricht.

Das durch die Lichtverteilung hervorgerufene Ausgangssignal des PDA bildet den Ausgangspunkt des vorliegenden Verfahrens, bei dem aus diesem Ausgangssignal die zugrundeliegende Winkelinformation ermittelt wird.

Das PDA-Signal, das neben der gewünschten Information auch diverse Störungen beinhalten kann, wird dazu in einem ersten Korrelationsfilter KF1 mit einer Filterfunktion RSK gefaltet, die es ermöglicht aus dem PDA-Signal das Hell-Dunkel-Muster, d.h. den abgebildeten Codierungsabschnitt zu rekonstruieren und außerdem dessen geometrische Lage bezüglich des PDA zu bestimmen. Die dazu verwendete Filterfunktion RSK ist eine Referenzsignalkurve, die einen relativ kurzen Ausschnitt einer möglichen Codefolge darstellt. Der gewählte Ausschnitt ist dabei deutlich kürzer als die gesamte Codefolge über 360°, jedoch länger als die bereits erwähnte kleinste Strukturbreite der Codespur. Es kann sich hierbei beispielsweise um eine Stufenfunktion handeln, wobei die Breite der Stufe der kleinsten Strukturbreite entspricht, oder um eine Sprungfunktion, die bei entsprechender Mindestbreite etwa in der Mitte den einem Hell-Dunkel-Übergang entsprechenden Signalsprung aufweist.

Das Resultat dieser Filterung ist eine erste Korrelationsfunktion "Signal", die in ihren ausgeprägten Extrema die Information über die Abfolge der Hell-Dunkel-Übergange sowie über deren Lage im Bezug auf das PDA enthält. Um eventuelle Störeinflüsse ausschließen zu können werden zur positiven Erkennung der Übergänge Schwellwerte für die Korrelationsfunktion "Signal" definiert. Nach Maßgabe dieser Schwellwerte werden in einem ersten Entscheidungsfilter EF1 Minima oder Maxima der Kurve, die diese nicht über- bzw. unterschreiten auch nicht als Hell-Dunkel-Übergänge gewertet. Die Lage der ermittelten Hell-Dunkel-Übergänge bezüglich des PDA wird in einem Speicher "Lage" abgespeichert und zur späteren Korrektur des ermittelten Winkelwerts verwendet.

Die auf die beschriebene Weise gewonnene Information über den auf das PDA abgebildeten Codierungsabschnitt kann in ein Bitmuster umgesetzt werden, welches diesen repräsentiert. Dabei macht man sich den Umstand zunutze, dass die kleinste Strukturbreite der Codespur in Pixeln in etwa bekannt ist, so dass eine Umsetzung in ein Bitmuster, bei dem jeweils ein Bit dieser kleinsten Strukturbreite entspricht ohne weiteres möglich ist. Alternativ hierzu ist es aber auch möglich, die tatsächliche kleinste Strukturbreite der Abbildung auf das PDA zu ermitteln, und die weitere Auswertung mit dieser ermittelten Größe durchzuführen. Dieser zusätzliche Verfahrenszweig ist Gegenstand einer vorteilhaften Weiterbildung des erfindungsgemäßen Verfahrens und wird im Anschluss an die Darstellung der Grundfunktion erläutert.

In dieser Grundfunktion wird in einem weiteren Schritt das wie zuvor beschrieben gewonnene Bitmuster in einem zweiten Korrelationsfilter KF2 mit einem die gesamte Codierung über 360° repräsentierenden Referenz-Bitmuster RBM zur Erzeugung einer zweiten Korrelationsfunktion "Code" gefaltet. Diese zweite Korrelationsfunktion "Code" enthält nun die Information, wo sich der auf das PDA abgebildete Codeabschnitt im Bezug auf die gesamte Codierung befindet. An der betreffenden Stelle weist die Korrelationsfunktion "Code" ein ausgeprägtes Maximum auf. Auch hier kann man wieder einen Korrelationsschwellwert festlegen, um Störeinflüsse zu vermeiden, bzw. um eine Aussage über die Verlässlichkeit des gewonnen Winkelwertes zu treffen. In einem zweiten Entscheidungsfilter EF2 wird deshalb ermittelt, ob das Maximum der Korrelationsfunktion "Code" diesen Schwellwert überschreitet und entsprechend der Ergebniswert gekennzeichnet.

Der ermittelte Codewert gibt die Lage der Codespur mit einer Auflösung wieder, die der kleinsten Strukturbreite der Codierung auf dem Codeträger entspricht, in dem gewählten Beispiel also ein Grad. Neben der Information über den abgebildeten Codeabschnitt ist aber auch die Lage dieses Abschnitts bezüglich des PDA bekannt und zwar pixelgenau bzw. sogar subpixelgenau. Diese Information wurde vorher im Speicher "Lage" abgelegt und ist jetzt verfügbar, so dass der ermittelte Code-Winkelwert mit Hilfe dieser Information noch einmal korrigiert und zum Gesamt- Winkelwert mit einer Auflösung von etwa einem Zehntel Grad verrechnet werden kann. Eine weitere Verbesserung der Genauigkeit lässt sich durch den bereits angesprochenen zusätzlichen Verfahrenszweig erreichen, mit dem die tatsächliche kleinste Strukturbreite der Abbildung auf das PDA ermittelt wird. Die tatsächliche kleinste Strukturbreite der Abbildung auf das PDA wird nämlich nicht nur durch die festgelegte Struktur der Codespur auf dem Codeträger sondern auch durch die Geometrie des gesamten optischen Strahlengangs beeinflusst. So können sich neben den Toleranzen bei der Herstellung des Codeträgers insbesondere radiale und axiale Toleranzen der Lagerung des Codeträgers auf diese Strukturbreite auswirken, und zwar so, dass diese von Winkelstellung zu Winkelstellung zumindest leicht unterschiedlich sein kann.

Ausgangspunkt für diesen Verfahrenszweig sind die bekannten Positionen der Hell-Dunkel-Übergänge auf dem PDA. Aufgrund der Art der Codierung muss der Abstand zwischen jeweils zwei aufeinanderfolgenden Hell-Dunkel-Übergängen jeweils genau einem ganzzahligen Vielfachen der kleinsten Strukturbreite der Abbildung auf das PDA entsprechen. Mittels einer linearen Regression, bei der man die bekannten Positionen gegen ein Raster aus festen Abständen aufträgt, lässt sich die tatsächliche Strukturbreite ermitteln, die am besten die realen Verhältnisse in dieser Situation wiedergibt. Neben der Steigung der angepassten Geraden mit dem minimalen quadratischen Fehler, die ein Maß für diese tatsächliche Strukturbreite liefert, gibt der Achsabschnitt dieser Geraden die geometrische Lage des Codes im Verhältnis zum PDA wieder und zwar mit Subpixel-Genauigkeit.

## Patentansprüche

1. Verfahren zur Absolutbestimmung eines Drehwinkels, insbesondere der Winkelstellung des Lenkrades eines Kraftfahrzeugs mittels einer eine Lichtquelle und ein eine Vielzahl von optoelektronischen Wandlerelementen aufweisendes Sensorarray umfassenden Sende-Empfangseinheit sowie einem gegenüber dieser drehbar angeordneten, eine eindeutige, einspurige Codierung der Winkelwerte aufweisenden Codeträger, wobei ein zusammenhängendes Segment der Codierung auf das Sensorarray abgebildet wird, und das Ausgangssignal des Sensorarrays zur Ermittlung eines dem aktuellen Winkelwert entsprechenden Codeworts ausgewertet wird, **dadurch gekennzeichnet, dass** das Ausgangssignal des Sensorarrays zur Rekonstruktion des abgebildeten Segments der Codespur in einem ersten Korrelationsfilter einer Faltungsoperation mit einem Referenz-Signal unterworfen wird, das ermittelte abgebildete Segment der Codespur in ein dasselbe repräsentierendes Bitmuster umgesetzt wird, das Bitmuster in einem zweiten Korrelationsfilter einer Faltungsoperation mit einem die gesamte Winkelinformation der Codespur darstellenden Referenz-Bitmuster unterworfen wird, und dass als aktuelles Codewort die Position der besten Übereinstimmung des Bitmusters mit dem Referenz-Bitmuster ermittelt wird.

2. Verfahren nach Anspruch 1, **dadurch gekennzeichnet, dass** das Referenz-Signal einen kurzen Abschnitt aus einem idealisierten Codesignal darstellt.

3. Verfahren nach Anspruch 1 oder 2, **dadurch gekennzeichnet, dass** in dem ersten Korrelationsfilter aus dem Ausgangssignal und dem Referenz-Signal eine erste Korrelationsfunktion gebildet wird, deren Extremwerte die Lage der Hell-Dunkel-Übergänge des Codesignals wiedergeben.

4. Verfahren nach Anspruch 3, **dadurch gekennzeichnet, dass** die Extremwerte der ersten Korrelationsfunktion in einem ersten Entscheidungsfilter mit festgelegten Korrelationsschwellwerten verglichen werden, und nur beim Über- bzw. Unterschreiten des entsprechenden Korrelationsschwellwerts das Vorliegen eines Hell-Dunkel-Übergangs des Codesignals festgestellt wird.

5. Verfahren nach einem der Ansprüche 1 bis 4, **dadurch gekennzeichnet, dass** in dem zweiten Korrelationsfilter aus dem Bitmuster mit dem Referenz-Bitmuster eine zweite Korrelationsfunktion gebildet wird, deren absolutes Maximum die Position der besten Übereinstimmung des Bitmusters mit dem Referenz-Bitmuster angibt.

6. Verfahren nach Anspruch 5, **dadurch gekennzeichnet, dass** das absolute Maximum der zweiten Korrelationsfunktion in einem zweiten Entscheidungsfilter mit einem festgelegten Korrelationsschwellwert verglichen werden, und nur beim Überschreiten des Korrelationsschwellwerts durch den Maximalwert der Korrelationsfunktion der Winkelwert als gültig markiert wird.

## Claims

1. Process for the absolute determination of an angle of rotation, in particular of the angular position of the steering wheel of a motor vehicle, by means of a transmitter-receiver unit made up of a light source and a sensor array comprising a plurality of optoelectronic transducer elements, together with a code carrier which is rotatably arranged in respect of the same and shows a unique, single-track coding of the angular values, for which purpose a continuous segment of the coding is imaged onto the sensor array and the output signal of the sensor array is evaluated to establish a code word corresponding to the current angular value, **characterised in that** in a first correlation filter the output signal of the sensor array is subjected to a convolution operation with a reference signal for the purpose of reconstructing the imaged segment of the code track; the established, imaged segment of the code track is converted into a bit pattern representing the same; in a second correlation filter the bit pattern is subjected to a convolution operation with a reference bit pattern representing the total angular data from the code track, and that the position of the best correspondence of the bit pattern and the reference bit pattern is determined as the current code word.

2. Process in accordance with Claim 1, **characterised in that** the reference signal represents a brief section from an idealised code signal.

3. Process in accordance with Claim 1 or Claim 2, **characterised in that** in the first correlation filter a first correlation function is generated from the output signal and the reference signal, the extreme values of which reflect the position of the light-dark transitions of the code signal.

4. Process in accordance with Claim 3, **characterised in that** the extreme values of the first correlation function are compared with defined correlation threshold values in a first decision-making filter, and the occurrence of a light-dark transition of the code signal is only determined if the relevant correlation threshold value is exceeded or undershot.

5. Process in accordance with any of Claims 1 to 4, **characterised in that** in the second correlation filter a second correlation function is generated from the bit pattern with the reference bit pattern, the absolute maximum of which specifies the position of the best correspondence of the bit pattern with the reference bit pattern.

6. Process in accordance with Claim 5, **characterised in that** the absolute maximum of the second correlation function is compared with a defined correlation threshold value in a second decision-making filter and the angular value is only marked as being valid provided the maximum value of the correlation function exceeds the correlation threshold value.

## Revendications

1. Procédé pour la détermination absolue d'un angle de rotation, en particulier de la position angulaire du volant d'un véhicule automobile, au moyen d'une unité émission-réception, qui comprend une source lumineuse et un réseau de détection présentant de nombreux éléments convertisseurs optoélectroniques, ainsi qu'un porteur de code, qui est agencé en pivotement par rapport à ladite unité, et qui présente une codification univoque, à piste unique, des paramètres angulaires, une image de segment continu de la codification étant formée sur le réseau de détection, et le signal de sortie du réseau de détection étant évalué pour la détermination d'un mot codé correspondant à la valeur angulaire actuelle, **caractérisé en ce que**, pour la reconstruction du segment de la piste codée, le signal de sortie du réseau de détection est soumis à une opération de convolution, avec un signal de référence, dans un premier filtre de corrélation, que l'image de segment formée de la piste codée est convertie en un profil binaire, qui représente celle-ci, que le profil binaire est soumis à une opération de convolution avec un profil binaire de référence, qui représente l'information d'angle complète de la piste codée, et que le mot codé actuel détermine la position de la meilleure concordance entre le profil binaire et le profil binaire de référence.

2. Procédé selon la revendication 1, **caractérisé en ce que** le signal de référence représente un court segment d'un signal codé idéalisé.

3. Procédé selon revendication 1 ou 2, **caractérisé en ce que**, dans un premier filtre de corrélation, est formée, à partir du signal de sortie et du signal de référence, une première fonction de corrélation, dont les valeurs extrêmes reproduisent la position des transitions clair-obscur du signal codé.

4. Procédé selon la revendication 3, **caractérisé en ce que** les valeurs extrêmes de la première fonction de corrélation sont comparées, dans un premier filtre de décision, avec des valeurs de corrélation de seuil fixées, et que la présence d'une transition clair-obscur du signal codé n'est constatée que lors d'un dépassement vers le haut ou vers le bas de la valeur de corrélation de seuil correspondante.

5. Procédé selon les revendications 1 à 4, **caractérisé en ce que**, dans le deuxième filtre de corrélation, est formée, à partir du profil binaire, avec le profil binaire de référence, une deuxième fonction de corrélation, dont le maximum absolu indique la position de la meilleure concordance entre le profil binaire et le profil binaire de référence.

6. Procédé selon la revendication 5, **caractérisé en ce que** le maximum absolu de la deuxième fonction de corrélation est comparé, dans un deuxième filtre de décision, avec une valeur de corrélation de seuil fixée et que la valeur angulaire n'est marquée en tant que valable que lorsque la valeur de corrélation de seuil est dépassée par la valeur maximale de la fonction de corrélation.
